# FASCICULE DE BREVET EUROPEEN

(11) **EP 4 098 860 B1**
(45) Date de publication et mention de la délivrance du brevet: **20.03.2024**
(21) Numéro de dépôt: 22170644.3
(22) Date de dépôt: 28.04.2022
(51) Int. Cl.: F02K 1/72, B29C 43/18, B29C 51/10, B29C 65/02, B32B 5/28, F02K 1/06, F02K 1/56

(54) **LAME POUR INVERSEUR DE POUSSEE ET UN PROCEDE DE FABRICATION D'UNE TELLE LAME**
BLATT FÜR SCHUBUMKEHRER UND VERFAHREN ZUR HERSTELLUNG EINES SOLCHEN BLATTS
BLADE FOR THRUST INVERTER AND METHOD FOR MANUFACTURING SUCH A BLADE

(30) Priorité: 04.06.2021 FR 2105881
(43) Date de publication de la demande: 07.12.2022
(73) Titulaire: AIRBUS OPERATIONS (S.A.S.), 31060 Toulouse (FR)
(72) Inventeur: RAVISE, Florian, 31060 TOULOUSE (FR); DE OLIVEIRA, Grégory, 31060 TOULOUSE (FR); SILLIERES, Lionel, 31060 TOULOUSE (FR); VANDERBAUWEDE, Simon, 31060 TOULOUSE (FR); GAILLARDO, Jérôme, 31060 TOULOUSE (FR); DUTHILLE, Bertrand, 31060 TOULOUSE (FR)
(74) Mandataire: Sarraméa, Claude

(56) Documents cités:
- EP-B1- 3 540 203
- US-A1- 2020 095 955
- US-B2- 10 406 729

## Description

La présente invention concerne une lame pour inverseur de poussée et un procédé de fabrication d'une telle lame.

De manière connue, un turboréacteur double flux comporte un moteur et une nacelle qui est fixée autour du moteur. Le turboréacteur double flux présente, entre la nacelle et le moteur, une veine secondaire dans laquelle circule un flux secondaire.

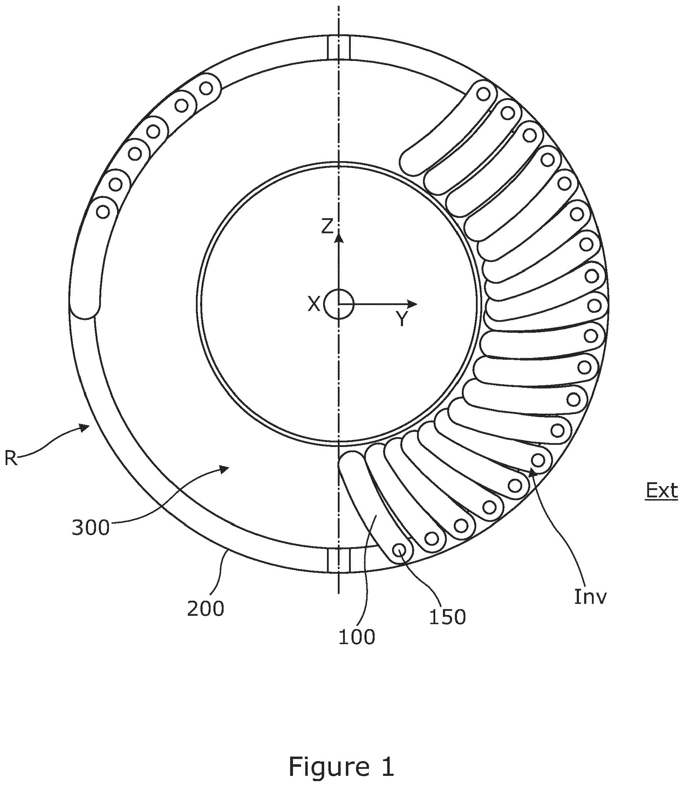

Il est connu du brevet EP3540203 d'utiliser des lames dans le système inverseur de poussée d'un turboréacteur pour réaliser une inversion de poussée. Tel qu'illustré à la figure 1 qui montre une nacelle 200 d'un turboréacteur R équipé d'un inverseur de poussée Inv selon le brevet susmentionné, chaque lame 100 est mobile en rotation, au moyen d'un mécanisme d'actionnement 150, sur la structure de la nacelle 200 entre une position escamotée (à gauche sur la figure) dans laquelle elle est en dehors de la veine secondaire 300 et une position déployée (à droite sur la figure) dans laquelle la lame 100 se positionne en travers de la veine secondaire 300 afin de dévier le flux secondaire vers une fenêtre qui est dans la paroi de la nacelle et qui est ouverte entre la veine secondaire 300 et l'extérieur de la nacelle Ext. Ainsi, le flux secondaire est dévié vers l'extérieur et plus précisément vers l'avant du turboréacteur R afin de produire une contre-poussée.

En position déployée des lames 100, le flux d'air circulant dans la veine secondaire 300 fait pression sur les lames 100 ce qui provoque la flexion de ces dernières. La contrainte de rigidité qui s'applique sur les lames 100 conduit à réaliser des lames usinées massives, aux coûts de fabrication élevés.

Il est souhaitable de remédier à ces inconvénients des lames de l'état de la technique, et de proposer des lames substituables, d'une masse et d'un cout de fabrication diminués.

Un objet de la présente invention est de répondre en tout ou partie à ce besoin en proposant des lames dont le rapport masse/raideur est optimisé.

A cet effet, est proposée une pale en matériau composite pour inverseur de poussée, comprenant :
- un corps rigide allongé longitudinalement et comprenant une structure alvéolaire allongée longitudinalement et limitée latéralement par une paroi transversale entourant ladite structure et formant un rebord de la structure alvéolaire,
- une paroi supérieure rigide allongée longitudinalement et disposée sur le corps ;
- une paroi inférieure rigide allongée longitudinalement et disposée sous le corps ;
chaque paroi supérieure et inférieure comportant des fibres de renfort continues et unidirectionnelles agglomérées par une matrice en résine thermoplastique assurant l'assemblage et la cohésion entre eux du corps et des parois supérieures et inférieures.

L'utilisation de matériaux composites, par nature légers, permet de conférer une raideur adéquate à la lame pour son utilisation dans un inverseur de poussée.

L'invention concerne également un procédé de fabrication d'une telle lame. Selon ce procédé, la lame est obtenue par l'assemblage par fusion sous pression de préformes des parois supérieure/inférieure avec le corps, après que chacun de ces éléments a été préfabriqué sous la forme d'une pièce élémentaire.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la figure 1 déjà décrite, est une vue de face et en coupe d'un turboréacteur double flux selon l'état de la technique ;
- la figure 2 est une vue en perspective d'une lame selon un mode de réalisation de l'invention ;
- la figure 3 est une vue en éclaté de la lame de la figure 2, selon un mode de réalisation de l'invention ;
- la figure 4 est une vue coupe, selon la ligne AA, de la lame représentée à la figure 1 ;
- la figure 5 est une représentation des étapes d'un procédé de fabrication d'une lame selon l'invention.

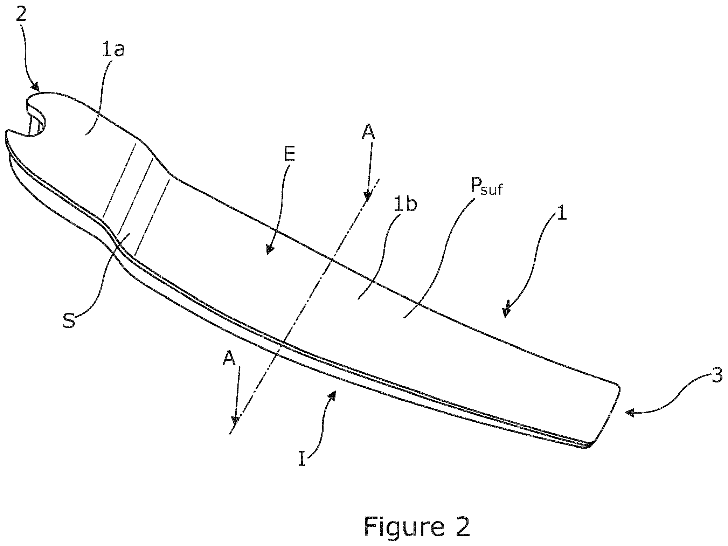

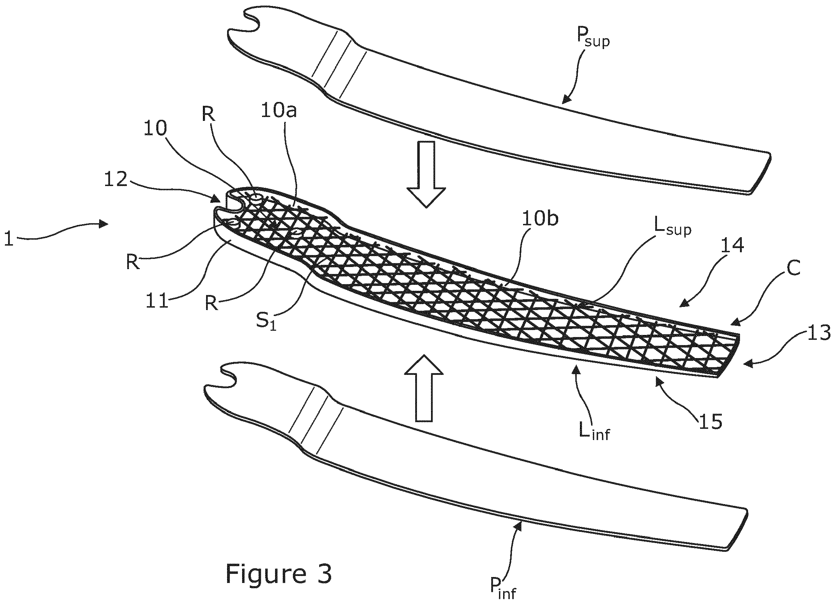

En relation avec les figures 2 et 3, une lame 1 comprend une partie courante allongée longitudinalement et s'étendant entre une première extrémité 2 et une seconde extrémité 3.

La lame 1 comprend une face supérieure E, dite extrados, et une face inférieure I, dite intrados, opposée à l'intrados et une épaisseur (distance entre intrados et extrados) décroissante de sa première extrémité 2 à sa seconde extrémité 3.

La lame 1 comprend un profilé soyé avec un soyage de liaison S reliant deux parties planes la, 1b décalées l'une de l'autre en hauteur, dont une première partie plane la s'étendant de la première extrémité 2 jusqu'au soyage de liaison S, et une seconde partie plane 1b s'étendant du soyage de liaison S jusqu'à la seconde extrémité 3.

La première partie 1a, de plus faible longueur que la seconde partie 1b, est appelée le pied de la lame par lequel la lame 1 est destinée à être fixée à un mécanisme d'actionnement (non représenté) de la lame pour mouvoir la lame 1 entre sa position déployée et sa position escamotée lorsque celle-ci est arrangé dans un inverseur de poussée.

Selon l'invention, et plus particulièrement visible sur la figure 3, la lame 1 est composée d'un corps C dans lequel sont logées une paroi inférieure Pinf, au niveau de l'intrados I de la lame, et une paroi supérieure Psup, au niveau de l'extrados E de la lame. Le corps C et les parois Psup, Pinf sont liés entre eux par une matrice de résine thermoplastique qui assure l'assemblage et la cohésion des éléments formant la lame. La résine est, par exemple, de type PEEK (polyether-ether-cétone).

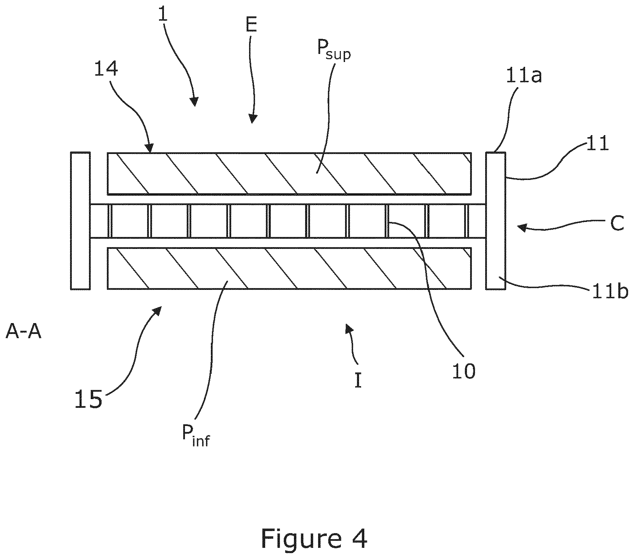

Visible à la figure 4, le corps C a une section transversale en forme de H formée par une structure alvéolaire 10 allongée longitudinalement et qui est limitée latéralement par une paroi transversale 11 qui entoure la structure alvéolaire 10.

La structure alvéolaire 10, par exemple, de type nid d'abeille ou mousse, se présente sous la forme d'une pièce de forme sensiblement parallélépipédique. La structure alvéolaire 10 a un profil soyé avec deux parties planes 10a, 10b décalées l'une de l'autre en hauteur, dont une première partie 10a s'étendant d'une première extrémité 12 de la structure alvéolaire 10 jusqu'à un soyage de liaison S1 et une seconde partie 10b s'étendant du soyage de liaison S1 jusqu'à une seconde extrémité 13 de la structure alvéolaire.

La première partie 10a de la structure alvéolaire coïncide avec la première partie 1a de la lame et la seconde partie 10b de la structure alvéolaire coïncide avec la seconde partie 1b de la lame.

La structure alvéolaire 10 comprend une face supérieure 14 et une face inférieure 15, opposée à la face supérieure 15 et une épaisseur (distance entre la face supérieure et inférieure) décroissante de sa première extrémité 12 à sa seconde extrémité 13.

La paroi transversale 11 se présente sous la forme d'une bande formant un rebord de la structure alvéolaire 10. La face extérieure de la paroi transversale 11 forme le bord latéral de la lame 1.

La paroi transversale 11 présente un bord supérieur 11a formant un bord saillant de la face supérieure 14 et un bord inférieur 11b formant un bord saillant de la face inférieure 15. La paroi transversale 11 définit avec la structure alvéolaire 10, un logement supérieur Lsup au niveau de la face supérieure 14 de la structure alvéolaire et un logement inférieur Linf au niveau de la face inférieure 15 de la structure alvéolaire.

Dans leur conception, la paroi transversale 11 et la structure alvéolaire 10 sont formés de manière monobloc, d'un même matériau thermoplastique constitué de fibres noyées dans une matrice de résine thermoplastique. Les fibres sont, par exemple, des fibres de carbones, d'aramide ou de verre.

De préférence, plusieurs renforts structuraux R sont intégrés à la structure alvéolaire 10. Les renforts structuraux R sont formés dans la première partie 10a de la structure alvéolaire, pour permettre la reprise des efforts transmis de la lame 1 à son mécanisme d'actionnement et inversement. Chaque renfort structural R est formé par un insert, en matériau composite ou métallique de forme polygonale ou cylindrique, s'étendant sur toute l'épaisseur de la structure alvéolaire 10.

La paroi supérieure Psup, intégralement logée dans le logement supérieur Lsup du corps C, est allongée longitudinalement et a une épaisseur décroissante entre une première extrémité, arrangée au niveau de la première extrémité 12 de la structure alvéolaire, et une seconde extrémité, arrangée au niveau de la seconde extrémité 13 de la structure alvéolaire. Une face externe de la paroi supérieure Psup affleure avec le bord supérieur 11a de la paroi tranversale 11 pour former ensemble l'extrados E de la lame.

La paroi inférieure Pinf, intégralement logée dans le logement inférieur Linf du corps, est allongée longitudinalement et a une épaisseur décroissante entre une première extrémité, arrangée au niveau de la première extrémité 12 de la structure alvéolaire, et une seconde extrémité, arrangée au niveau de la seconde extrémité 13 de la structure alvéolaire. Une face externe de la paroi inférieure Pinf affleure avec le bord inférieur 11b de la paroi tranversale 11 pour former ensemble l'intrados I de la lame.

Chaque paroi, inférieure ou supérieure, Psup/Pinf est stratifiée et constituée d'un empilement de plusieurs couches de nappes de fibres continues et unidirectionnelles, agglomérées par une matrice de résine thermoplastique.

Les fibres sont orientées selon des angles prédéterminés dans un but de renforcer la raideur de la paroi Psup/Pinf selon son axe longitudinal et les fibres peuvent ainsi, sur la hauteur de l'empilement, avoir une orientation différente d'une couche à l'autre.

Les fibres sont, par exemple, choisies parmi les matériaux suivants : carbone, aramide, verre.

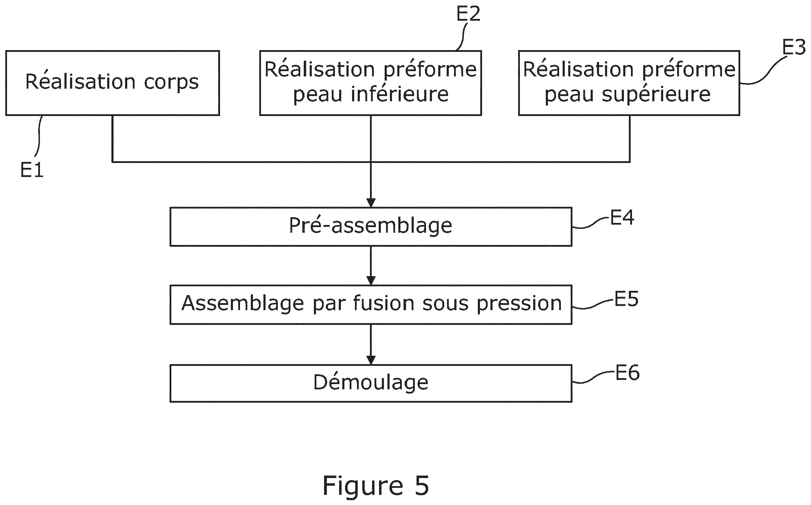

Le procédé de fabrication de la lame 1, décrit ci-dessous et en relation avec la figure 5, comprend une étape E5 essentielle, effectuée dans un moule d'assemblage par fusion sous pression de préformes des parois supérieure/inférieure avec le corps, après que chacun de ces éléments a été préfabriqué sous la forme d'une pièce élémentaire.

Le corps C est fabriqué, dans une première étape, E1 par injection dans un moule à partir d'un demi-produit sous forme de poudre ou de granulé de résine auquel sont ajoutées des fibres courtes. Le cycle de fabrication du corps C comprend cinq étapes principales, à savoir : plastification du demi-produit par chauffage à la température de fusion de la résine (environ 400°C pour du PEEK), fermeture du moule, remplissage du moule sous pression pour le moulage, refroidissement, et démoulage de la pièce élémentaire.

Le moule installé sur une presse est constitué de deux coquilles qui sont fortement pressées l'une contre l'autre au moment du moulage puis écartées lors du démoulage pour permettre l'éjection de la pièce moulée. Les inserts formant les renforts structuraux R sont placés dans le moule avant sa fermeture préalable à l'étape de remplissage du moule pour être ainsi structurellement intégrés à la structure alvéolaire 10.

Pour la réalisation de la préforme de la paroi inférieure Pinf comme pour la réalisation de la réforme de la paroi supérieure Psup (étapes E2 et E3 à la figure 3), on utilise un procédé de fabrication hors autoclave mise en oeuvre par une machine de drapage automatique utilisant comme matière première des bandes destinées à être découpées par la machine pour former des renforts textiles. Chaque bande se présente sous la forme d'un assemblage de plusieurs fils de fibres continues et unidirectionnelle maintenus par un voile thermoplastique contrecollé sur chacune des faces de l'assemblage.

Le procédé de fabrication hors autoclave d'une préforme comprend les étapes successives suivantes :
i) réalisation, sur un support plan, d'une plaque constituée par la superposition de plusieurs couches de renforts, où chaque couche est orientée de manière prédéterminée selon une séquence programmée de drapage.
ii) assemblage des couches entre elles par une réactivation thermique, par exemple via un laser commandé par la machine de drapage automatique, pour faire fondre les voiles thermoplastiques des renforts. Le nombre de couches, le découpage spécifique des bandes selon des longueurs prédéfinies combiné à l'orientation et le positionnement spécifique des renforts permet de faire varier localement les dimensions de la plaque pour y former une préforme avec des dimensions prédéterminées.
iii) découpe de la plaque effectuée par laser ou jet de fluide pour séparer la préforme du reste de la plaque.

Une fois que toutes les pièces élémentaires ont été fabriquées, ces dernières sont disposées dans un moule d'assemblage par fusion sous pression de la lame, ce moule comprenant une partie de moule inférieure et une partie de moule supérieure. La partie de moule inférieure comporte une empreinte présentant une forme complémentaire à la forme souhaitée de l'intrados I de la lame 1 tandis que la partie de moule comporte une empreinte présentant une forme complémentaire à la forme souhaitée de l'extrados E de la lame 1.

Les pièces élémentaires préfabriquées sont disposées dans le moule de sorte qu'elles occupent dans ce dernier les positions respectives qu'elles occupent dans la lame 1. Cette opération consiste essentiellement à :
i) disposer, en premier lieu, la préforme de la paroi intérieure sur l'empreinte de la partie de moule inférieure disposée de sorte que la préforme est placée à l'horizontale ;
ii) disposer le corps C au-dessus de la préforme de la paroi inférieure en logeant cette dernière dans le logement inférieur Linf du corps ;
iii) disposer la préforme de la paroi supérieure au-dessus du corps et en logeant ladite préforme dans le logement supérieur Lsup du corps C ;
iv) disposer, en dernier lieu, la partie de moule supérieure sur la préforme de la paroi supérieure, l'empreinte de la partie de moule supérieure recouvrant ladite préforme.

L'assemblage sous pression par fusion consiste à chauffer les pièces élémentaires dans le moule à une température supérieure à la température de fusion de la résine pour faire fondre cette dernière et, simultanément à presser les deux parties du moule l'une contre l'autre pour exercer sur les pièces élémentaires une pression suffisante afin d'assurer la continuité de la matrice de résine entre les différentes pièces et leur assemblage par fusion sous pression. La pression est, par exemple, de l'ordre de 1 Mpa (10 bar).

De manière identique chacune des faces supérieure 14 et inférieure 15 du corps C, la pression exercée sur la préforme plaque cette dernière sur le corps C et elle est ainsi intégralement logée et remplit entièrement son logement de destination. Du fait de la pression, les préformes prennent la forme du corps C, avec un profil soyé. La résine fondue remplit tous les espaces vides entre les préformes et le corps C.

Le refroidissement du moule et de son contenu assure ensuite la solidification de la matrice de résine et la rigidification des pièces élémentaires ainsi assemblées, et la lame 1 ainsi obtenue peut être ensuite démoulée après ouverture du moule.

L'invention a été décrite dans le cas où le corps C est formé d'une seule pièce. En alternative, le corps C pourrait être formé, toujours comme pièce élémentaire avant l'étape E5 d'assemblage par fusion sous pression, mais cette fois par le collage de la paroi transversale 11 autour de la structure alvéolaire 10, cette dernière étant réalisée par un procédé de moulage par injection.

Selon cette alternative (non illustrée sur les figures), la réalisation du corps C comprend, tout d'abord, la réalisation de la structure alvéolaire 10 puis le collage (par exemple au moyen d'une résine thermoplastique) de la paroi transversale 11 autour de la structure alvéolaire 10. La paroi transversale 11 peut être en un matériau diffèrent de celui de la structure alvéolaire 10. La paroi transversale 11 peut être ainsi en un matériau pris parmi : un matériau composite, un matériau métallique de type aluminium ou titane, ou un matériau souple de type silicone. La paroi transversale 11 en un matériau métallique ou souple permet de protéger les bords de la lame 1 contre l'érosion.

Enfin, l'invention a été décrite dans le cas la lame 1 présente un profil soyé, mais une lame avec un profil plat est envisageable, et dans ce cas, le procédé de fabrication tel que décrit ci-dessus doit être adapté pour un tel profil. Une telle adaptation est à la portée de l'homme du métier et n'a donc pas besoin d'être décrite plus avant.

## Revendications

1. Lame (1) pour inverseur de poussée, **caractérisée en ce qu'**elle comprend :
- un corps (C) rigide allongé longitudinalement et comprenant une structure alvéolaire (10) allongée longitudinalement et limitée latéralement par une paroi transversale (11) entourant ladite structure et formant un rebord de la structure alvéolaire (10),
- une paroi supérieure (Psup) rigide allongée longitudinalement et disposée sur le corps (C) ;
- une paroi inférieure (Pinf) rigide allongée longitudinalement et disposée sous le corps (C) ;
et **en ce que** chaque paroi supérieure et inférieure (Psup, Pinf) comporte des fibres de renfort continues et unidirectionnelles agglomérées par une matrice en résine thermoplastique assurant l'assemblage et la cohésion entre eux du corps (C) et des parois supérieures et inférieures (Pinf, Psup).

2. Lame (1) selon la revendication 1, **caractérisée en ce que** le dit corps (C) présente deux logements (Linf, Lsup), avec un logement inférieur (Linf) arrangé sur une première face (15) du corps et un logement supérieur (Lsup) arrangé sur une seconde face (14) du corps, opposée à la première face, la paroi supérieure (Psup) est intégralement logée dans le logement supérieur (Lsup) et la paroi inférieure (Pinf) est intégralement logée dans le logement inférieur (Linf).

3. Lame (1) selon l'une quelconque des revendications 1 à 2, **caractérisée en ce que** la structure alvéolaire (10) comprend plusieurs renforts structuraux (R).

4. Lame (1) selon l'une quelconque des revendications 1 à 3, **caractérisée en ce que** la paroi transversale (11) est formée d'un seul tenant avec la structure alvéolaire (10).

5. Lame (1) selon l'une quelconque des revendications 1 à 3, **caractérisée en ce que** la paroi transversale (11) est une pièce collée à la structure alvéolaire (10).

6. Lame (10) selon la revendication 5, **caractérisée en ce que** la paroi transversale (11) est réalisée en un matériau diffèrent de celui de la structure alvéolaire (10).

7. Lame (1) selon l'une quelconque des revendications 1 à 6, **caractérisée en ce qu'**elle comprend un profilé soyé avec un soyage de liaison (S) reliant deux parties planes (1a, 1b) décalées l'une de l'autre en hauteur, dont une première partie plane (1a) s'étendant d'une première extrémité longitudinale (2) de la lame jusqu'au soyage de liaison (S), et une seconde partie plane (3) s'étendant du soyage de liaison (S) jusqu'à une seconde extrémité longitudinale (3) de la lame.

8. Procédé de fabrication d'une lame (1) comprenant les étapes suivantes :
- une étape (E1) de réalisation d'un corps (C) rigide allongé longitudinalement et comprenant une structure alvéolaire (10) allongée longitudinalement et limitée latéralement par une paroi transversale (11) entourant ladite structure et formant un rebord de la structure alvéolaire (10), le corps (C) présentant deux logements, avec un logement inférieur (Linf) arrangé sur une première face (15) du corps et un logement supérieur (Lsup) arrangé sur une seconde face (14) du corps (C), opposée à la première face (15);
- une étape (E2) de réalisation d'une première préforme consistant à réaliser une première préforme allongée longitudinalement, comportant des fibres de renfort continues et unidirectionnelles agglomérées par une matrice en une résine thermoplastique, la première préforme étant dimensionnée pour pouvoir être logée dans le logement supérieur (Lsup);
- une étape (E3) de réalisation d'une seconde préforme consistant à réaliser une seconde préforme allongée longitudinalement, comportant des fibres de renfort continues et unidirectionnelles agglomérées par une matrice en une résine thermoplastique, la seconde préforme étant dimensionnée pour pouvoir être logée dans le logement inférieur (Linf);
- une étape (E4) de pré-assemblage consistant à disposer le corps (C) et les préformes dans un moule d'assemblage par fusion sous pression, où la première préforme est logée dans le logement supérieur (Lsup) du corps (C) et la seconde préforme est logé dans le logement inférieur (Linf) du corps (C) ;
- une étape (E5) d'assemblage consistant à assurer, dans le moule d'assemblage sous pression, l'assemblage par fusion sous pression du corps (C) et des préformes pour former la lame (1) ;
- une étape (E6) de démoulage consistant à démouler la lame (1) ainsi obtenue après refroidissement et solidification de la matrice thermoplastique.

9. Procédé selon la revendication 8, **caractérisé en ce que** la première préforme, comme la seconde préforme, est obtenue par un procédé de fabrication hors autoclave.

## Patentansprüche

1. Blatt (1) für einen Schubumkehrer, **dadurch gekennzeichnet, dass** es Folgendes beinhaltet:
- einen starren Körper (C), der sich in Längsrichtung erstreckt und eine Wabenstruktur (10) beinhaltet, die sich in Längsrichtung erstreckt und seitlich durch eine Querwand (11) begrenzt wird, die die Struktur umgibt und einen Rand der Wabenstruktur (10) bildet,
- eine starre obere Wand (Psup), die sich in Längsrichtung erstreckt und auf dem Körper (C) angeordnet ist;
- eine starre untere Wand (Pinf), die sich in Längsrichtung erstreckt und unter dem Körper (C) angeordnet ist;
und dass jede obere und untere Wand (Psup, Pinf) durchgehende und unidirektionale Verstärkungsfasern umfasst, die durch eine Matrix aus thermoplastischem Harz agglomeriert sind, welche die Verbindung und den Zusammenhalt zwischen dem Körper (C) und der unteren und der oberen Wand (Pinf, Psup) sicherstellt.

2. Blatt (1) nach Anspruch 1, **dadurch gekennzeichnet, dass** der Körper (C) zwei Aufnahmen (Linf, Lsup) aufweist, wobei eine untere Aufnahme (Linf) auf einer ersten Seite (15) des Körpers eingerichtet ist und eine obere Aufnahme (Lsup) auf einer zweiten Seite (14) des Körpers, die der ersten Seite gegenüberliegt, eingerichtet ist, wobei die obere Wand (Psup) vollständig in der oberen Aufnahme (Lsup) aufgenommen ist und die untere Wand (Pinf) vollständig in der unteren Aufnahme (Linf) aufgenommen ist.

3. Blatt (1) nach einem beliebigen der Ansprüche 1 bis 2, **dadurch gekennzeichnet, dass** die Wabenstruktur (10) mehrere strukturelle Verstärkungen (R) beinhaltet.

4. Blatt (1) nach einem beliebigen der Ansprüche 1 bis 3, **dadurch gekennzeichnet, dass** die Querwand (11) mit der Wabenstruktur (10) einstückig ausgebildet ist.

5. Blatt (1) nach einem beliebigen der Ansprüche 1 bis 3, **dadurch gekennzeichnet, dass** die Querwand (11) ein an die Wabenstruktur (10) angeklebtes Teil ist.

6. Blatt (10) nach Anspruch 5, **dadurch gekennzeichnet, dass** die Querwand (11) aus einem Material hergestellt ist, das sich von demjenigen der Wabenstruktur (10) unterscheidet.

7. Blatt (1) nach einem beliebigen der Ansprüche 1 bis 6, **dadurch gekennzeichnet, dass** es ein gekröpftes Profil mit einer Verbindungskröpfung (S) beinhaltet, die zwei ebene Abschnitte (1a, 1b), die zueinander in der Höhe versetzt sind, verbindet, von denen sich ein erster ebener Abschnitt (1a) von einem ersten Längsende (2) des Blattes bis zu der Verbindungskröpfung (S) erstreckt und ein zweiter ebener Abschnitt (3) von der Verbindungskröpfung (S) bis zu einem zweiten Längsende (3) des Blattes erstreckt.

8. Verfahren zur Herstellung eines Blattes (1), das die folgenden Schritte beinhaltet:
- einen Schritt (E1) des Herstellens eines starren Körpers (C), der sich in Längsrichtung erstreckt und eine Wabenstruktur (10) beinhaltet, die sich in Längsrichtung erstreckt und seitlich durch eine Querwand (11) begrenzt wird, die die Struktur umgibt und einen Rand der Wabenstruktur (10) bildet, wobei der Körper (C) zwei Aufnahmen aufweist, wobei eine untere Aufnahme (Linf) auf einer ersten Seite (15) des Körpers eingerichtet ist und eine obere Aufnahme (Lsup) auf einer zweiten Seite (14) des Körpers (C), die der ersten Seite (15) gegenüberliegt, eingerichtet ist;
- einen Schritt (E2) des Herstellens einer ersten Vorform, der darin besteht, eine erste Vorform herzustellen, die sich in Längsrichtung erstreckt und durchgehende und unidirektionale Verstärkungsfasern umfasst, die durch eine Matrix aus einem thermoplastischen Harz agglomeriert werden, wobei die erste Vorform so bemessen ist, dass sie in der oberen Aufnahme (Lsup) aufgenommen werden kann;
- einen Schritt (E3) des Herstellens einer zweiten Vorform, der darin besteht, eine zweite Vorform herzustellen, die sich in Längsrichtung erstreckt und durchgehende und unidirektionale Verstärkungsfasern umfasst, die durch eine Matrix aus einem thermoplastischen Harz agglomeriert werden, wobei die zweite Vorform so bemessen ist, dass sie in der unteren Aufnahme (Linf) aufgenommen werden kann;
- einen Schritt (E4) des Vorverbindens, der darin besteht, den Körper (C) und die Vorformen in einer Form zum Schmelzverbinden unter Druck anzuordnen, wobei die erste Vorform in der oberen Aufnahme (Lsup) des Körpers (C) aufgenommen wird und die zweite Vorform in der unteren Aufnahme (Linf) des Körpers (C) aufgenommen wird;
- einen Schritt (E5) des Verbindens, der darin besteht, in der Form zum Verbinden unter Druck das Schmelzverbinden unter Druck des Körpers (C) und der Vorformen sicherzustellen, um das Blatt (1) zu bilden;
- einen Schritt (E6) des Ausformens, der darin besteht, das so erhaltene Blatt (1) nach Abkühlung und Verfestigung der thermoplastischen Matrix auszuformen.

9. Verfahren nach Anspruch 8, **dadurch gekennzeichnet, dass** die erste Vorform, wie auch die zweite Vorform, durch ein Herstellungsverfahren ohne Autoklav erhalten wird.

## Claims

1. Blade (1) for a thrust reverser, **characterized in that** it comprises:
- a longitudinally elongate rigid body (C) comprising a longitudinally elongate cellular structure (10) bounded laterally by a transverse wall (11) surrounding said structure and forming a rim of the cellular structure (10),
- a longitudinally elongate rigid upper wall (Psup) disposed on the body (C);
- a longitudinally elongate rigid lower wall (Pinf) disposed beneath the body (C);
and **in that** each upper and lower wall (Psup, Pinf) has continuous unidirectional reinforcing fibres agglomerated by a matrix made of thermoplastic resin ensuring the assembly and cohesion between the body (C) and the upper and lower walls (Pinf, Psup).

2. Blade (1) according to Claim 1, **characterized in that** said body (C) has two housings (Linf, Lsup), with a lower housing (Linf) arranged on a first face (15) of the body and an upper housing (Lsup) arranged on a second face (14) of the body, opposite the first face, the upper wall (Psup) is entirely housed in the upper housing (Lsup) and the lower wall (Pinf) is entirely housed in the lower housing (Linf).

3. Blade (1) according to either one of Claims 1 and 2, **characterized in that** the cellular structure (10) comprises a plurality of structural reinforcements (R).

4. Blade (1) according to any one of Claims 1 to 3, **characterized in that** the transverse wall (11) is formed in one piece with the cellular structure (10).

5. Blade (1) according to any one of Claims 1 to 3, **characterized in that** the transverse wall (11) is a piece adhesively bonded to the cellular structure (10).

6. Blade (10) according to Claim 5, **characterized in that** the transverse wall (11) is made of a material different from that of the cellular structure (10).

7. Blade (1) according to any one of Claims 1 to 6, **characterized in that** it comprises a swaged profile with a connecting swage (S) connecting two planar parts (1a, 1b) that are offset from one another in terms of height, including a first planar part (1a) extending from a first longitudinal end (2) of the blade as far as the connecting swage (S), and a second planar part (3) extending from the connecting swage (S) as far as a second longitudinal end (3) of the blade.

8. Method for manufacturing a blade (1) comprising the following steps:
- a step (E1) of producing a longitudinally elongate rigid body (C) comprising a longitudinally elongate cellular structure (10) bounded laterally by a transverse wall (11) surrounding said structure and forming a rim of the cellular structure (10), the body (C) having two housings, with a lower housing (Linf) arranged on a first face (15) of the body and an upper housing (Lsup) arranged on a second face (14) of the body (C), opposite the first face (15);
- a step (E2) of producing a first preform consisting in producing a first longitudinally elongate preform, having continuous unidirectional reinforcing fibres agglomerated by a matrix made of a thermoplastic resin, the first preform being dimensioned so as to be able to be housed in the upper housing (Lsup);
- a step (E3) of producing a second preform consisting in producing a second longitudinally elongate preform, having continuous unidirectional reinforcing fibres agglomerated by a matrix made of a thermoplastic resin, the second preform being dimensioned so as to be able to be housed in the lower housing (Linf);
- a step (E4) of preassembly consisting in disposing the body (C) and the preforms in a mould for assembly by melting under pressure, wherein the first preform is housed in the upper housing (Lsup) of the body (C) and the second preform is housed in the lower housing (Linf) of the body (C);
- a step (E5) of assembly consisting in ensuring, in the mould for assembly under pressure, the assembly by melting under pressure of the body (C) and the preforms so as to form the blade (1);
- a step (E6) of demoulding consisting in demoulding the blade (1) thus obtained after cooling and solidification of the thermoplastic matrix.

9. Method according to Claim 8, **characterized in that** the first preform, like the second preform, is obtained via an out-of-autoclave manufacturing method.
